# DEMANDE DE BREVET EUROPEEN

(11) **EP 1 980 431 A1**
(43) Date de publication de la demande: **15.10.2008**
(21) Numéro de dépôt: 08154263.1
(22) Date de dépôt: 09.04.2008
(51) Int. Cl.: B60H 1/00

(54) **Système de commande pour une installation, en particulier une installation de chauffage, ventilation et/ou climatisation d'un véhicule**

(30) Priorité: 10.04.2007 FR 0702592
(71) Demandeur: VALEO SYSTEMES THERMIQUES, 78321 Le Mesnil St Denis Cedex (FR)
(72) Inventeur: Dutre, Stéphane, 94100 Saint Maur des Fosses (FR); Karl, Stefan, 78580 Bazemont (FR)
(74) Mandataire: Léveillé, Christophe

(57) **Abrégé**

L'invention concerne un système de commande pour une installation (10), en particulier une installation de chauffage, ventilation et/ou climatisation d'un véhicule automobile, comprenant au moins une interface homme-machine (11) reliée à une entrée (E1) d'un dispositif de commande (12) comprenant des sorties (S1 à S4) reliées à des actionneurs (A1 à A4) d'éléments techniques permettant le réglage de paramètres de l'installation, notamment la température d'air, du débit d'air et de la distribution d'air.

Selon l'invention, l'interface homme-machine (11) comprend des moyens d'affichage (110) pour afficher un ensemble de désignations clés (Da à Dd), qualifiant une situation de confort, aptes à être sélectionnées par un utilisateur, des moyens de sélection (ZS,111) d'une de ces désignations clés (Da à Dd), des moyens d'émission, vers l'entrée (E1) du dispositif de commande (12), d'un signal spécifique (SSP) à la désignation clé (Da à Dd) sélectionnée, déclenchés lors de la sélection d'une désignation clé (Da à Dd).

Le dispositif de commande (12) comprend des moyens de traitement (121) pour associer chaque signal spécifique (SSP) à un ensemble particulier de paramètres de réglage (PPR), des moyens de calcul (122) de signaux de consigne (SC1 à SC4) à partir d'au moins les paramètres de réglage (PPR) et des moyens d'envoi, sur les sorties (S1 à S4) du dispositif de commande (12) et vers les actionneurs (A1 à A4), des signaux de consigne (SC1 à SC4) correspondant aux paramètres de réglage (PPR), afin de réaliser un réglage simultané de l'ensemble des actionneurs (A1 à A4).

## Description

La présente invention se rapporte au domaine général des systèmes de commande pour une installation, en particulier une installation de chauffage, ventilation et/ou climatisation d'un véhicule automobile.

Le contrôle de tels systèmes de commande nécessite que soit ajusté un certain nombre de paramètres de réglages. Dans le cadre d'une installation de chauffage, ventilation et/ou climatisation d'un véhicule automobile, ces paramètres de réglage sont, en particulier, le débit d'air, la température de consigne, la distribution d'air, l'activation ou non de la climatisation, etc.

Ces paramètres de réglage permettent classiquement de commander des actionneurs, par exemple un volet de mixage de températures, un pulseur, des volets de distribution d'air, un compresseur...

Il a été constaté que les utilisateurs possédant de tels systèmes de commande, en particulier d'une installation de chauffage, ventilation et/ou climatisation, sont bien souvent déroutés face à la multitude d'ajustements possibles pour de tels systèmes de commande.

Les utilisateurs éprouvent en effet des difficultés à associer un désir de réglages ou des ressentis physiologiques avec des paramètres de réglage disponibles, en particulier la température, le débit d'air, la distribution d'air dans le cas d'une installation de chauffage, ventilation et/ou climatisation d'un véhicule automobile.

Bien souvent, un ajustement confortable est trouvé et conservé en permanence par crainte de ne pas être capable de le retrouver.

Par ailleurs, on a également constaté que la fonction "distribution d'air" d'une installation de chauffage, ventilation et/ou climatisation d'un véhicule automobile est bien souvent mal comprise.

Pour aider l'utilisateur d'une installation de chauffage, ventilation et/ou climatisation d'un véhicule automobile, il a été conçu des systèmes de commande automatiques qui contrôlent l'ensemble des paramètres de réglage des actionneurs suivant des procédés automatiques développés par le fabricant de voitures ou par le fabricant de l'installation de chauffage, ventilation et/ou climatisation.

Néanmoins, bien souvent, les ajustements choisis lors du développement de ces systèmes automatiques peuvent être jugés inconfortables par l'utilisateur.

Par exemple, certaines personnes n'apprécient pas de recevoir un flux d'air directement sur le visage alors que l'orientation du flux d'air prévue par le développement est systématiquement celui-ci dans le cas de conditions climatiques extérieures caniculaires. Dans un tel cas, l'utilisateur n'aura pour autre choix que d'ajuster par lui-même chacun des paramètres, ce qui inhibe le fonctionnement automatique du système de commande.

La présente invention a donc pour but principal de palier les inconvénients des systèmes de commande d'installations disposant d'une interface homme-machine, en particulier les installations de chauffage, ventilation et/ou climatisation connus.

Elle propose, à cet effet, un système de commande pour une installation comprenant au moins une interface homme-machine reliée à un dispositif de commande permettant le réglage de différents paramètres de l'installation. Selon la présente invention, l'interface homme-machine comprend des moyens d'affichage pour afficher un ensemble de désignations clés, qualifiant une situation de confort, aptes à être sélectionnées par un utilisateur et des moyens de sélection d'une de ces désignations clés.

En outre, le système de commande comprend des moyens d'émission vers une entrée du dispositif de commande d'un signal spécifique à la désignation clé sélectionnée, les moyens d"émission étant déclenchés lors de la sélection d'une désignation clé.

Selon une caractéristique additionnelle, le dispositif de commande comprend des moyens pour associer chaque signal spécifique à un ensemble particulier de paramètres de réglage.

Il peut également comprendre des moyens de calcul de signaux de consigne à partir des paramètres de réglage et/ou des moyens d'envoi des signaux de consigne correspondant aux paramètres de réglage sur les sorties du dispositif de commande afin de réaliser un réglage simultané de l'ensemble des actionneurs.

Avec un tel système de commande, l'utilisateur a uniquement besoin de sélectionner une désignation clé parmi un ensemble de désignations clés qualifiant chacune une situation de confort pour commander l'ensemble des actionneurs d'organes techniques permettant le réglage des paramètres de l'installation de manière à obtenir la situation de confort qualifiée dans la désignation clé choisie, en particulier de la température d'air du débit d'air et de la distribution d'air d'une installation de chauffage, ventilation et/ou climatisation.

Ainsi, l'ajustement de l'ensemble des paramètres de réglage ne nécessite aucune connaissance de l'utilisateur à propos de la signification de chacun des paramètres ni à propos de la valeur à donner à chaque paramètre pour obtenir une sensation particulière.

Avantageusement, les paramètres de réglage sont des paramètres aérothermiques.

De tels paramètres désignant classiquement une température de consigne, un débit d'air de consigne, une distribution d'air de consigne, l'activation ou non d'une installation de chauffage, ventilation et/ou climatisation servent ensuite au calcul de signaux de consigne pour les actionneurs tenant compte, notamment, du différentiel entre la température de consigne et la température mesurée dans l'habitacle, du débit d'air de consigne et de la vitesse du pulseur, de la distribution d'air de consigne et la position d'un volet de distribution d'air et/ou de la position observée d'un volet d'entrée d'air.

Par ailleurs, avantageusement, les moyens de calcul des signaux de consigne utilisent les paramètres de réglage ainsi que des mesures de paramètres effectués à l'intérieur et/ou à l'extérieur d'un espace dans lequel est disposé l'installation, en particulier l'habitacle d'un véhicule. Ces paramètres mesurés peuvent être des paramètres aérothermiques.

Selon une première réalisation de l'invention, chaque désignation clé qualifiant une ambiance particulière, l'ensemble des paramètres de réglage des actionneurs associés à la désignation clé est un ensemble fixe et/ou variable. Une ambiance particulière est un ressenti ou un désir de paramétrage désiré par l'utilisateur.

Ainsi, quelque que soit les paramètres environnant ou influençant l'installation, l'utilisateur obtiendra de façon récurrente les mêmes conditions et/ou réglages par simple sélection d'une désignation clé.

Dans le cas d'installation de chauffage, ventilation et/ou climatisation, la présente invention permet que la situation de confort soit identique pour une désignation clé choisie donnée quelles que soient les conditions climatiques extérieures. Par exemple, que la désignation clé soit choisie en hiver ou en été, les paramètres de réglage correspondant à une situation de confort particulière désignée par une désignation clé donnée seront toujours identiques.

Ainsi, selon un mode de réalisation alternatif, l'ensemble des paramètres de réglage, notamment des actionneurs, associés à la désignation clé est un ensemble variable. En particulier, il peut dépendre du climat extérieur obtenu, par exemple, par la mesure de la température extérieure.

Dans un second mode de réalisation, le système comprend en outre des moyens d'acquisition d'un profil thermique de l'utilisateur, les moyens pour associer chaque signal spécifique à un ensemble particulier de paramètres de réglage des actionneurs étant alors tels que les paramètres de réglage associés à au moins une désignation clé sont alors fonction de ce profil thermique.

L'utilisation d'un profil thermique de l'utilisateur rend possible un ajustement des paramètres de réglage tenant compte du profil thermique de l'utilisateur.

La présente invention est également propre à une installation de chauffage, ventilation et/ou climatisation d'un véhicule automobile comprenant un système de commande ayant l'une des caractéristiques décrites précédemment.

Selon une alternative, les sorties du dispositif de commande sont reliées à des actionneurs (A1 à A4), propres à permettre le réglage de la température d'air, du débit d'air et de la distribution d'air.

D'autres caractéristiques et avantages de la présente invention ressortiront de la description faite ci-dessous, en référence aux dessins annexés qui en illustrent un exemple de réalisation dépourvu de tout caractère limitatif sur lesquels:
- la figure 1 représente un système de commande d'une installation de chauffage, ventilation et/ou climatisation d'un véhicule automobile, selon l'invention, et
- la figure 2 donne un exemple de profil thermique tel que pouvant être utilisé au sein de l'invention.

Les exemples de réalisation qui vont être décrits sont en relation avec une installation de chauffage, ventilation et/ou climatisation. Toutefois, la présente invention couvre également les systèmes de commande pour une installation comprenant au moins une interface homme-machine reliée à un dispositif de commande permettant le réglage de différents paramètres de cette installation.

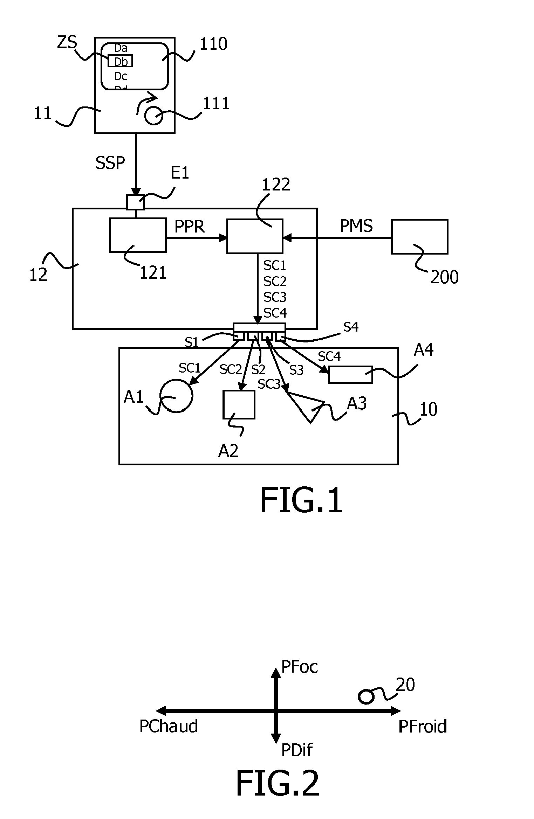

La figure 1 représente un système de commande pour une installation 10 de chauffage, ventilation et/ou climatisation installé dans un véhicule automobile, en particulier un habitacle.

Ce système comprend au moins une interface homme/machine 11 reliée à une entrée E1 d'un dispositif de commande 12 comprenant une pluralité de sorties S1 à S4. Les sorties S1 à S4 sont reliées respectivement à un actionneur d'organes techniques A1 à A4 permettant le réglage des paramètres de l'installation, en particulier la température d'air, le débit d'air et la distribution d'air de l'installation 10. Le nombre d'entrées et de sorties du dispositif de commande n'est pas limité à l'exemple décrit.

Ainsi que représenté sur la figure 1, l'interface homme/machine 11 comprend des moyens d'affichage 110, par exemple un écran, aptes à afficher un ensemble de désignations clés Da à Dd. Chacune de ces désignations clés Da à Dd définit un réglage désiré et/ou qualifie une situation de confort et/ou une ambiance particulière souhaitée. L'affichage est par exemple réalisé sous la forme d'une liste déroulante de désignations clés.

L'interface homme/machine 11 comprend en outre des moyens de sélection 111 d'une de ces désignations clés Da à Dd, par exemple un bouton monté en rotation, permettant de sélectionner l'une ou l'autre des désignations Da à Dd en déplaçant une zone de sélection ZS d'une désignation, par exemple Db, sur la liste présentée sur l'écran 110. Selon un exemple de réalisation non représente, chaque désignation clé peut être associée à un bouton dédié actionné par appui sur celui-ci.

Le moyen de sélection 111 est avantageusement apte à être poussé de manière à confirmer la sélection de la désignation, ici Db, encadrée par la zone de sélection ZS.

Une fois une désignation clé sélectionnée, un signal spécifique SSP est envoyé vers une entrée E1 du dispositif de commande 12.

Ce signal spécifique SSP est traité par le dispositif de commande 12 au sein de moyens de traitement 121 aptes à associer chaque signal spécifique SSP à un ensemble particulier de paramètres de réglage PPR des actionneurs A1 à A4. Un actionneur est un organe ou élément de l'installation dont le fonctionnement influe sur le fonctionnement de l'installation afin d'attendre les réglages désirés et/ou les situations de confort requises et/ou les ambiances particulières souhaitées.

Les paramètres de réglage PPR sont ensuite envoyés vers des moyens de calcul 122 aptes à calculer des signaux de consigne SC1 à SC4 pour chacun des actionneurs A1 à A4 à partir des paramètres de réglage PPR.

Dans le présent exemple de réalisation, quatre actionneurs A1 à A4 sont décrits. La présente invention s'applique également aux installations comprenant un nombre supérieur ou inférieur d'actionneurs.

Avantageusement, afin que les moyens de calcul 122 calculent des signaux de consigne tenant compte d'un différentiel entre une consigne et un paramètre mesuré, par exemple la température observée dans l'habitacle et la température consigne d'une installation de chauffage, ventilation et/ou climatisation, au moins un capteur 200 envoie des mesures PMS des paramètres mesurés, en particulier les paramètres aérothermiques dans l'habitacle.

Les signaux de consigne SC1 à SC4 sont ensuite envoyés sur les sorties S1 à S4 du dispositif de commande 12 vers les actionneurs A1 à A4.

Ainsi, un réglage simultané de l'ensemble des actionneurs A1 à A4 est effectué alors même que l'utilisateur n'a sélectionné qu'une seule désignation, Db dans l'exemple decrit.

On constate bien ici que l'invention simplifie radicalement, pour l'utilisateur, le réglage des paramètres de l'installation 10.

Dans la suite, sont donnés deux exemples de réalisation selon lesquels les désignations clés qualifient des situations de confort choisies selon des critères distincts.

Dans une première réalisation, l'ensemble des paramètres de réglage PPR des actionneurs A1 à A4 associés à chaque désignation clé est un ensemble de paramètres fixes. Alternativement, chaque désignation clé est un ensemble de paramètres variable, dépendant, en particulier, du climat extérieur obtenu, par exemple, par la mesure de la température extérieure.

Dans ce cas, chaque désignation qualifie une ambiance particulière correspondant à un ajustement des actionneurs correspondant aux paramètres de réglage PPR d'une installation de chauffage, ventilation et/ou climatisation.

Dans un premier mode de réalisation, l'invention utilise un certain nombre de désignations clés D qualifiant des "évènements climatiques" ainsi que ressentis par l'utilisateur.

Le tableau ci-dessous donne un exemple de mots clés associés à un certain nombre de paramètres de réglage que sont une température de consigne, une débit d'air, une distribution d'air, un taux d'humidité de l'air quand cette dernière peut être choisie dans l'installation de chauffage, ventilation et/ou climatisation, par exemple en contrôlant la température de l'évaporateur du système thermique.

| **D** | **TConsigne** | **Débit** | **Distribution** | **Humidité** |
|---|---|---|---|---|
| **Da: Brise de mer** | 18°C | Fort | Tête | Forte |
| **Db: Vent du désert** | 28°C | Faible | Homogène | Faible |

Le choix entre ces désignations explicites pour l'utilisateur peut être réalisé en déplaçant un curseur dans une liste ou en poussant un bouton de programme. Néanmoins, la sélection peut également être réalisée par tout autre moyen susceptible d'être utilisé dans l'habitacle d'un véhicule.

De la sorte, on comprend bien que l'utilisateur associe à chacune des désignations clés qualificatives d'une situation particulière de confort, un résultat en termes de confort thermique. Le choix du confort thermique devient alors intuitif et particulièrement convivial.

L'utilisateur se souvient plus facilement de la désignation clé à sélectionner pour obtenir la situation particulière de confort recherchée et obtenir un résultat thermique particulier. Il est donc plus aisé à l'utilisateur d'arriver à un ressenti désiré que lorsque chaque paramètre doit être ajusté séparément sur un tableau de commande.

Le choix d'une des désignations clés Da à Db provoque automatiquement l'ajustement du fonctionnement des actionneurs A1 à A4 de l'installation 10 de chauffage, ventilation et/ou climatisation selon les paramètres correspondants.

Ainsi qu'illustré sur la figure 1, l'installation 10 comprend au moins un actionneur A1 pour actionner un volet de mélange air chaud/air froid permettant de contrôler la température à l'intérieur de l'habitacle, un actionneur A2 pour moduler la vitesse d'un groupe moto-ventilateur, un actionneur A3 pour actionner un ou plusieurs volets de distribution d'air. Avantageusement, un actionneur A4 pour actionner un organe permettant de modifier l'humidité de l'air soufflé dans l'habitacle, en particulier un compresseur d'un circuit de climatisation.

Selon un exemple alternatif de réalisation, un actionneur supplémentaire pour actionner un volet d'entrée d'air permettant de sélectionner le flux d'air entrant dans une installation de chauffage, ventilation et/ou climatisation entre de l'air extérieur et/ou de l'air recirculé, c'est-à-dire provenant de l'intérieur d'un habitacle dont l'air est traité par l'installation de chauffage, ventilation et/ou climatisation.

Selon une caractéristique particulière, l'installation 10 de chauffage, ventilation et/ou climatisation peut aussi comprendre un système de diffusion d'un parfum qui sera aussi commandé par un actionneur dédié.

La diffusion de parfum est en effet avantageusement utilisée pour améliorer la sensation associée à un évènement climatique reproduit dans l'habitacle de l'automobile. La combinaison du contrôle climatique avec la diffusion de parfum peut alors donner une impression accrue d'être en bord de mer, à la montagne etc.

Les désignations clés Da à Dd telles qu'utilisées pour l'invention sont avantageusement choisies de manière à solliciter l'imagination de l'utilisateur en associant par exemple un paysage à une sensation physique de circulation de l'air et de température de l'air.

Il est également possible que certaines désignations clés puissent être modifiées par l'utilisateur de manière à ce que puisse être personnalisé l'ensemble du système de commande de l'installation de chauffage, ventilation et/ou climatisation.

Dans un second mode de réalisation, l'invention propose d'utiliser une liste de désignations clés qualifiant des situations de confort reprenant des sensations physiques.

Dans les exemples décrits ci-après, le débit, généré par le pulseur, est quantifié sur une échelle allant de 1 à 5 et la distribution comprend au moins trois sorties d'air (distribution pied, distribution tête, distribution dégivrage). Le tableau présenté ci-dessous donne un exemple d'une pluralité de désignations associées à des paramètres de réglage particuliers.

| **D** | **TConsigne** | **Débit (Pulseur)** | **Distribution** |
|---|---|---|---|
| **Da: Avoir toujours très chaud** | 26-28°C | 1-2 | Pied |
| **Db: Avoir toujours chaud** | 24-25°C | 1-2 | Pied-Tête |
| **Dc: Avoir toujours un peu chaud** | 22-23°C | 1-2 | Pied-Tête |
| **Dd: Avoir toujours un peu froid** | 20-21°C | 1-2 | Pied-Tête |
| **De: Avoir toujours froid** | 18-19°C | 1-2 | Pied-Tête |
| **Df: Avoir toujours très froid** | 15-17°C | 2 | Tête |
| **Dg: Avoir ni chaud, ni froid** | 21-22°C | 1-2 | Pied-Tête |

Les deux tableaux suivants donnent d'autres exemples où les désignations sont proches des sensations humaines.

| **D** | **TConsigne** | **Débit (pulseur)** | **Distribution** |
|---|---|---|---|
| **Da: Environnement très différent de celui de l'extérieur** | Ext - 6°C si ext > 24°C Ext + 6°C si ext < 20°C | 1-2 | Variable |
| **Db: Environnement différent de celui de l'extérieur** | Ext-4°C si ext > 24°C Ext + 4°C si ext < 20°C | 1-2 | Variable |
| **Dc: Environnement légèrement différent de celui de l'extérieur** | Ext - 2°C si ext > 24°C Ext + 2°C si ext < 20°C | 1-2 | Variable |
| **Dd: Environnement identique à** l'extérieur | Ext ±1 °C | 1-2 | Variable |

Ces désignations sont avantageusement présentées à l'utilisateur sous forme d'un menu déroulant.

| **D** | **TConsigne** | **Débit (pulseur)** | **Distribution** |
|---|---|---|---|
| **Da: Sensation fenêtre ouverte** | Variable | 3-4 | Tête |
| **Db: Sensation fenêtre partiellement ouverte** | Variable | 2-3 | Pied |
| **Dc: Sensation Fenêtre non ouverte** | Variable | 1-2 | Tête |

Les paramètres définis dans les tableaux ci-dessus sont susceptibles d'évolués et d'être changés en fonction du niveau de complexité et des fonctionnalités de l'installation considérée.

Ces tableaux sont par exemple utilisés au sein d'un algorithme qui transforme chaque paramètre de réglage représentatif de la désignation clé sélectionnée par l'utilisateur en valeur fonctionnelle pour chacun des organes techniques, par exemple des volets de mixage d'air de distribution d'air, le pulseur, le compresseur, l'évaporateur, etc.

Selon une caractéristique particulière de ce second mode de réalisation, le système de commande utilise des moyens d'acquisition d'un profil thermique de l'utilisateur.

Comme illustré sur la figure 2, un tel profil thermique est par exemple défini selon deux axes dont l'horizontal décrit de gauche à droite une grande sensibilité à la chaleur PChaud vers une grande sensibilité au froid PFroid et l'axe vertical décrit de bas en haut décrit une grande préférence pour l'air diffusé PDif, c'est-à-dire créant un flux d'air diffus dans l'habitacle, vers une grande préférence pour l'air focalisé PFoc, c'est-à-dire créant un flux d'air dirigé vers une zone particulière de l'habitacle, où l'utilisateur est invité à se placer grâce à un curseur 20 en fonction de sa préférence pour la chaleur ou au froid entre les deux positions extrêmes PChaud et PFroid et en fonction de sa sensibilité par rapport à l'air diffusé ou à l'air focalisé entre les deux positions extrêmes PDif et PFoc.

Les moyens d'acquisition servant pour acquérir ce profil thermique peuvent être implémentés directement à l'aide de l'interface homme/machine par les moyens d'affichage 110 de celle-ci, tel qu'un affichage sur l'écran. Le profil thermique peut aussi être acquis à l'aide d'un bouton rotatif, d'une glissière ou encore d'un écran tactile, par exemple.

La position du curseur 20 sur l'espace défini par chacun des deux axes vertical et horizontal est ensuite utilisée par les moyens qui associent chaque désignation clé D à des paramètres de réglage PPR.

En effet, les paramètres de réglage PPR associés sont alors définis en fonction de la nature de la désignation clé D ainsi que du profil thermique de l'utilisateur.

Par exemple, des températures de consigne correspondant à la désignation clé "avoir toujours très chaud" seront de 26°C dans le cas où une grande préférence du froid sera signalée dans le profil thermique et de 28°C si une grande préférence à la chaleur est signalée au sein du profil thermique.

Un tel système de commande trouve une application toute particulière dans une installation de chauffage, ventilation et/ou climatisation. Néanmoins, il est envisageable d'employer de tels systèmes de commandes pour toutes installations comprenant au moins une interface homme-machine reliée à un dispositif de commande permettant le réglage de différents paramètres de cette installation de façon intuitive.

On remarque ainsi que diverses mises en oeuvre peuvent être réalisées selon les principes de l'invention.

Par ailleurs, les divers exemples de réalisation décrits précédemment peuvent considérés séparément ou en combinaison les uns avec les autres.

## Revendications

1. Système de commande pour une installation (10) comprenant au moins une interface homme-machine (11) reliée à un dispositif de commande (12) permettant le réglage de différents paramètres de l'installation (10), **caractérisé en ce que** l'interface homme-machine (11) comprend des moyens d'affichage (110) pour afficher un ensemble de désignations clés (Da à Dd), qualifiant une situation de confort, aptes à être sélectionnées par un utilisateur et des moyens de sélection (ZS, 111, 20) d'une des désignations clés (Da à Dd)

2. Système de commande selon la revendication 1, **caractérisé en ce qu'**il comprend des moyens d'émission vers au moins une entrée (E1) du dispositif de commande d'un signal spécifique (SSP) à la désignation clé (Da à Dd) sélectionnée déclenchés lors de la sélection d'une désignation clé (Da à Dd).

3. Système de commande selon la revendication 2, **caractérisé en ce que** le dispositif de commande (12) comprend des moyens de traitement (121) pour associer chaque signal spécifique (SSP) à un ensemble particulier de paramètres de réglage (PPR),

4. Système de commande selon la revendication 3, **caractérisé ce qu'**il comprend des moyens de calcul (122) de signaux de consigne (SC1 à SC4) à partir des paramètres de réglage (PPR)

5. Système de commande selon la revendication 4, **caractérisé ce qu'**il comprend des moyens d'envoi des signaux de consigne (SC1 à SC4) correspondant aux paramètres de réglage (PPR) sur des sorties (S1 à S4) du dispositif de commande (12) afin de réaliser un réglage simultané de l'ensemble des actionneurs (A1 à A4).

6. Système de commande selon l'une des revendications 1 à 5, **caractérisé en ce que** les paramètres de réglage (PPR) sont des paramètres aérothermiques.

7. Système de commande selon l'une des revendications 4 à 6, **caractérisé en ce que** les moyens de calcul (122) des signaux de consigne (SC1 à SC4) utilisent les paramètres de réglage (PPR) et des mesures (PMS) de paramètres effectués à l'intérieur et/ou à l'extérieur d'un espace dans lequel est disposée l'installation (10).

8. Système de commande selon l'une des revendications 1 à 7, **caractérisé en ce que**, chaque désignation clé (Da à Dd) qualifiant une ambiance particulière, l'ensemble des paramètres de réglage (PPR) associés à la désignation clé (Da à Dd) est un ensemble de paramètres fixes.

9. Système de commande selon l'une des revendications 1 à 7, **caractérisé en ce que**, chaque désignation clé (Da à Dd) qualifiant une ambiance particulière, l'ensemble des paramètres de réglage (PPR) associés à la désignation clé (Da à Dd) est un ensemble de paramètres variables.

10. Système de commande selon l'une des revendications 1 à 9, **caractérisé en ce qu'**il comprend en outre des moyens d'acquisition (20) d'un profil thermique de l'utilisateur.

11. Système de commande selon la revendication 10, **caractérisé en ce que** les paramètres de réglage (PPR) des actionneurs (A1 à A4) associés à au moins une désignation clé (Da à Dd) sont en outre fonction de ce profil thermique.

12. Installation de chauffage, ventilation et/ou climatisation d'un véhicule automobile comprenant un système de commande selon l'une des revendications 1 à 11.

13. Installation selon la revendication 12, dans laquelle les sorties (S1 à S4) du dispositif de commande (12) sont reliées à des actionneurs (A1 à A4).

14. Installation selon la revendication 12 ou 13, dans lequel le dispositif de commande (12) permet le réglage de la température d'air, du débit d'air et de la distribution d'air.
